# EUROPÄISCHE PATENTSCHRIFT

(11) **EP 1 155 250 B1**
(45) Veröffentlichungstag und Bekanntmachung des Hinweises auf die Patenterteilung: **14.05.2003**
(21) Anmeldenummer: 00903689.8
(22) Anmeldetag: 11.02.2000
(51) Int. Cl.: F16K 5/02, F16K 5/16

(54) **ARMATUR**
FITTING
ROBINET

(30) Priorität: 25.02.1999 DE 29903320 U
(43) Veröffentlichungstag der Anmeldung: 21.11.2001
(73) Patentinhaber: Xomox International GmbH & Co., 88131 Lindau (DE)
(72) Erfinder: GONSIOR, Wolfgang, D-88131 Bodolz (DE)
(74) Vertreter: Schmitt, Meinrad, Dipl.-Ing.
(86) Internationale Anmeldenummer: EP0001137
(87) Internationale Veröffentlichungsnummer: WO00050791

(56) Entgegenhaltungen:
- US-A- 4 101 113
- US-A- 4 159 818
- US-A- 4 462 568
- US-A- 4 475 713
- US-A- 5 064 167
- US-A- 5 263 682

## Beschreibung

Die Erfindung bezieht sich auf ein Verfahren gemäß dem im Oberbegriff des Patentanspruchs 1 angegebenen Merkmalen.

Aus dem US-Patent 4 101 113 ist eine nach einem derartigen Verfahren herzustellende Armatur bekannt, welche in einem Gehäuse einen als konisches Küken ausgebildeten Drehkörper aufweist. Mit dem Drehkörper ist einteilig ein Schaft verbunden, welcher durch einen mit dem Gehäuse verbundenen Deckel der als Ventil ausgebildeten Armatur nach außen geführt ist. Das Gehäuse enthält eine Anlagefläche für eine Ringfläche des Deckels, wobei die Anlagefläche radial außen von einem Ringbund umgeben ist, mittels welchem der Deckel bezüglich des Gehäuses zentriert wird. Zwischen der Außenfläche des Schaftes und einer diesen umgebenden Innenfläche des Deckels ist ein Ringspalt vorhanden, in welchem ein Dichtelement angeordnet ist, das einerseits an der Innenfläche des Deckels und andererseits an der Außenfläche des Schaftes dichtend anliegt. Das Dichtelement ist axial zwischen zwei Druckringen eingespannt, wobei der eine Druckring an der Außenfläche des Schaftes und der andere Druckring an der Innenfläche des Deckels anliegt. Mittels eines teilweise in den= genannten Ringspalt eingreifenden Feststellringes wird das Dichtelement mit Druck beaufschlagt, wobei über einen gleichfalls im Ringspalt angeordneten Stützring eine Abstützung auf einer axialen Stirnfläche des Drehkörpers erfolgt. Ferner ist ein sekundäres Dichtelement in Form einer Membran- oder Packungsscheibe vorgesehen, welche radial außen zwischen dem Gehäuse und dem Deckel eingespannt ist und radial innen zwischen dem Stützring und der genannten axialen Stirnfläche des Drehkörpers festliegt. Der Stützring ist mittels zweier ,Zentrierringe bezüglich des Schaftes zentriert und enthält eine nach außen gerichtete Ringschulter, wobei zur Innenfläche des Deckels ein relativ großer Abstand vorgegeben ist. Eine genaue Zentrierung des Deckels bezüglich des Schaftes ist nicht vorgesehen. Das Gehäuse enthält eine vergleichsweise weiche Büchse aus Kunststoff, insbesondere aus Polytetrafluorethylen (PTFE), welche zur schwimmenden Lagerung des Drehkörpers dient und eine metallische Berührung des Drehkörpers mit dem Gehäuse verhindert. Der Drehkörper enthält eine Durchgangsöffnung derart, daß entsprechend der momentane Drehstellung um die Drehachse des Drehkörpers der Durchgang zumindest teilweise frei gegeben oder abgesperrt werden kann. Da mittels der genannten Büchse Toleranzen der Innenmaße des Gehäuses ausgeglichen werden, stimmt bei einem derart schwimmend gelagerten Drehkörper oder Küken die Drehachse üblicherweise mit der Gehäuseachse nicht überein.

Ferner ist aus dem US-Patent 4 462 458 eine Armatur mit einem schwimmend gelagerten und als konisches Küken ausgebildeten Drehkörper bekannt, mit welchem ein Schaft einteilig verbunden ist. Zwischen dem Deckel und dem Gehäuse ist ein Dichtelement eingespannt, welches an der Außenfläche des Schaftes dichtend anliegt. Das Gehäuse enthält eine dem Deckel zugeordnete Anlagefläche, welche radial außen von einem Ringbund zur Zentrierung des Deckels bezüglich des Gehäuses vorgesehen ist. Mittels des Deckels und eines Druckringes wird die axiale Lage des Drehkörpers im Gehäuse gesichert, wobei ferner Dichtkräfte auf ein sekundäres Dichtelement, wie z. B. eine Metall- oder Formmembrane, übertragen werden. Der Deckel liegt teilweise auf dem Dichtelement auf und ist im Gehäuse mittels des genannten Ringbundes zentriert. Das Dichtelement liegt im Krafthaupschluss, wobei die radiale Ausrichtung des Dichtelements zum Schaft im wesentlichen von der Position des Deckels und eines im Deckel angeordneten Zentrierringes vorgegeben ist. Insbesondere aufgrund der aus einem vergleichsweise weichen Material bestehenden Büchse und von Fertigungstoleranzen muß davon ausgegangen werden, daß das die Achsen des Gehäuses, des Drehkörpers und des Deckels nicht übereinstimmen.

Derartige Armaturen werden zum Drehen des Drehkörpers oftmals mit Antrieben ausgerüstet, welche üblicherweise mittels Konsolen auf dem genannten Deckel befestigt und insbesondere an einem Zentrierbund des Deckels zentriert werden. Infolge eines Achsversatzes zwischen dem Drehkörper und dem Deckel und / oder der genannten Konsole bzw. dem Antrieb können Querkräfte auftreten, welche auf den Drehkörper einwirken und zu Leckagen sowie einen vorzeitigen Verschleiß der genannten Büchse und / oder der sekundären Dichtelementes führen. Des weiteren kann infolge der form- und kraftschlüssigen Verbindung zwischen dem. Deckel, dem sekundären Dichtelement und dem Gehäuse nicht ausgeschlossen werden, daß sich die zu übertragenden Antriebskräfte negativ auf die Dichtkräfte des sekundären Dichtelements auswirken oder die Dichtkräfte zumindest teilweise aufheben, mit der Folge einer unzulässigen externen Leckage.

Aus dem EP-Patent gemäß EP 0 353 521 B 1 ist daher eine als Durchgangshahn ausgebildete Armatur bekannt, deren Drehkörper und Schaft zweiteilig ausgebildet und in geeigneter Weise zur Übertragung einer Drehbewegung gekoppelt sind. Durch die zweiteilige Ausführung von Schaft und Drehkörper kann ein konstruktions- oder fertigungsbedingter Versatz der Achsen des Drehkörpers des Gehäuses, des Deckels und des Schaftes ausgeglichen werden. Hierdurch ist jedoch ein nicht unerheblicher zusätzlicher Fertigungs- und Montageaufwand gegeben.

Hiervon ausgehend liegt der Erfindung die Aufgabe zugrunde, ein einfach durchzuführendes Verfahren zur Herstellung einer Armatur vorzuschlagen, um die aufgezeigten Nachteile zu vermeiden. Die verschiedenen Sekundärteile, wie insbesondere die Büchse, das sekundäre Dichtelement, der Deckel und gegebenenfalls ein Antrieb zum Drehen des Drehkörpers, sollen in funktionssicherer Weise derart angeordnet werden, daß diese zentrisch und querkraftfrei zur Drehachse des schwimmend gelagerten Drehkörpers montiert werden.

Die Lösung dieser Aufgabe erfolgt gemäß den Merkmalen des Patentanspruchs 1.

Das vorgeschlagene Verfahren gewährleistet bei einfacher und gleichwohl funktionsgerechter Konstruktion die zentrische bzw. koaxiale Anordnung der verschiedenen Sekundärteile bezüglich der Drehachse des schwimmend gelagerten Drehkörpers, so daß Querkräfte auf die Sekundärteile vermieden werden. Bei der Herstellung bzw. Montage der Armatur wird der Deckel mit seiner ebenen Ringfläche zunächst direkt an der gleichfalls ebenen Antagefläche des Gehäuses zur Anlage gebracht, wobei keine Zentriermittel für den Deckel bezüglich des Gehäuses vorgesehen werden. Nachfolgend wird der Deckel mittels einer Montagehülse deren Innenfläche spielfrei an der Außenfläche des Schaftes anliegt und welche mit dem Deckel korrespondierende Zentriermittel enthält, oder mittels eines im Deckel angeordneten Zentrierringes, welcher an der Außenfläche des Schaftes anliegt, bezüglich des Schaftes und somit der Drehachse des Drehkörpers zentriert. Da der Schaft einteilig mit dem Drehkörper ausgebildet ist, ist somit der Deckel bezüglich der Drehachse des Drehkörpers koaxial ausgerichtet, und zwar unabhängig davon, wie die Drehachse bezüglich der Gehäuseachse liegt. Ein mit dem Deckel verbindbarer Antrieb des Drehkörpers ist somit gleichfalls bezüglich der Drehachse zentriert, und unerwünschte Querkräfte werden somit vermieden. Das am Schaft anliegende Dichtelement, welches ferner zwischen dem Deckel und dem Gehäuse angeordnet ist, liegt vorteilhaft im Kraftnebenschluß, wobei eine ausschließlich kraftschlüssige Verbindung des Deckels mit dem Gehäuse vorgegeben ist. Bei der Montage der Armatur wird eine Zentrierung des am Schaft anliegenden Dichtelementes gewährleistet, so daß ein punktueller und / oder über den Umfang ungleichmäßiger Verschleiß des Dichtelements vermieden wird und für eine lange Lebensdauer eine funktionssichere Abdichtung gewährleistet ist.

In einer vorteilhaften Weiterbildung wird der in einer Ausnehmung des Deckels angeordnete Druckring als Zentrierkörper genutzt, wobei mittels eines elastischen Elements und/oder eines weiteren Dichtringes, insbesondere in Form eines O-Ringes, eine radiale Abstützung des Zentrierkörpers innerhalb der genannten Ausnehmung am Deckel sichergestellt ist. Zwischen dem Zentrierkörper und dem Deckel, vorzugsweise einer zylindrischen Innenwand desselben, ist ein Ringspalt vorhanden, so daß keine direkte Anlage des Zentrierkörpers am Deckel vorgesehen ist. Vielmehr wird der Ringspalt mittels des genannten elastischen Elements und/oder Dichtringes überbrückt, wobei der Zentrierkörper mittelbar im Deckel abgefangen ist. Der Zentrierkörper enthält eine Stützfläche derart, daß zumindest in radialer Richtung eine Abstützung des sekundären Dichtelements gewährleistet ist. Der Zentrierkörper ist als Ring ausgebildet und dient als Druckring für den Drehkörper, damit dieser in axialer Richtung in die Büchse des Gehäuses mit vorgebbarer axialer Vorspannung gepreßt wird. Der gleichzeitig als Druckring ausgebildete und als Zentrierkörper wirksame Ring besitzt somit eine Doppelfunktion, welche bei minimalem Materialaufwand und Platzbedarf zum einen das axiale Einpressen des schwimmend gelagerten Drehkörpers in die Büchse und zum anderen die Zentrierung des sekundären Dichtelements sicherstellt.

Die Armatur, durch deren Gehäuse ein Strömungsmedium strömen kann, kann insbesondere als Durchgangs-, Mehrwege- und Regelhahn mit einem insbesondere als Küken oder Kugel ausgebildeten Drehkörper ausgebildet sein oder als Stell- oder Regelklappe, deren Drehkörper als im Gehäuse schwimmend gelagerte Klappenscheibe ausgebildet ist. Mittels des Drehkörpers ist die Strömung des Strömungsmediums beeinflußbar, insbesondere absperrbar, drosselbar oder regelbar. Eine besondere Lagerung des Schaftes im Deckel entfällt, und der Fertigungs- und Montageaufwand ist reduziert. Zwischen dem Deckel und dem Gehäuse ist die Verbindung derart vorgegeben, daß zweckmäßig sämtliche Dichttelle im Kraftnebenschluß liegen und zur Montage eine freie radiale Bewegbarkeit und Ausrichtung des Deckels und insbesondere der Dichtteile bezüglich des Drehkörpers ermöglicht ist, wobei in zweckmäßiger Weise der Deckel metallisch auf der zugeordneten Auflagefläche des Gehäuses aufliegt. Sämtliche Dichtteile, insbesondere Primär- und Sekundärdichtungen, liegen im Kraftnebenschluß und Antriebskräfte haben auf jene keinen Einfluß. Die Zentrierung des Deckels erfolgt mittels des durch die Deckelbohrung hindurchgeführten Schaftes während der Montage durch Verwendung einer Montagehülse oder durch einen im Deckel vorgesehenen Zentrierring, so daß die Schaftachse identisch übereinstimmt mit der Drehachse des Drehkörpers bzw. der Kükenachse. Über den mit dem Gehäuse fest verbundenen Deckel erfolgt der Krafthauptschluß.

Weder der Deckel noch das Gehäuse enthalten miteinander korrespondierende Zentriermittel, wie Ringbunde, Zentrierflächen, Nuten oder dergleichen. Der Deckel ist im Auflagebereich bzw. der korrespondierenden Auflagefläche des Gehäuses plan ausgebildet, so daß die zentrische Ausrichtung bezüglich der Dreh- oder Kükenachse ohne weiteres auch dann durchführbar ist, wenn die Drehachse des Absperrorgans nicht exakt mit der Gehäuseachse fluchtet, wobei die genannte Gehäuseachse durch die Geometrie der Aufnahmeöffnung des Gehäuses für das Absperrorgan definiert ist. Das Absperrorgan ist in der genannten Büchse aus im Vergleich zum Werkstoff des Gehäuses weichem Material gelagert und bildet die Dreh- oder Kükenachse, welche konstruktions- und fertigungsbedingt nicht deckungsgleich mit der genannten Gehäuseachse sein muß. Mittels des Kükenschaftes erfolgt in zweckmäßiger Weise die Zentrierung der Sekundärteile, insbesondere Deckel und Sekundärdichtungen, Deltaring, Form- und Stahlmembran sowie dem Kükenschaft zugeordnete Stopfbuchsenteile. Der Deckel und ebenso die genannten Form- und Stahlmembranen können in zweckmäßiger Weise radial auf zugeordneten Auflageflächen des Gehäuses zwecks koaxialer Ausrichtung zur Dreh- oder Kükenachse, zu welcher die Schaftachse exakt koaxial bzw. identisch ist, verschoben werden, wobei in bevorzugter Weise die Dichtteile im Kraftnebenschluß liegen.

Besondere Ausgestaltungen und Weiterbildungen der Erfindung sind in den Unteransprüchen sowie der weiteren Beschreibung angegeben.

Die Erfindung wird nachfolgend anhand der in der Zeichnung dargestellten besonderen Ausführungsbeispiele näher erläutert, ohne daß insoweit eine Beschränkung erfolgt. Es zeigen:
- Fig. 1: teilweise einen Schnitt durch die als Durchgangshahn ausgebildete Armatur in einer axialen Schnittebene,
- Fig. 2: eine Aufsicht auf den Durchgangshahn in Blickrichtung II gemäß Fig. 1,
- Fig. 3, 4: teilweise einen Schnitt sowie eine Aufsicht auf eine zweite Ausführungsform des Durchgangshahns mit einer Sicherheitsstopfbuchse,
- Fig. 5, 6: teilweise einen Schnitt sowie eine Aufsicht auf eine weitere Ausführungsform mit Sicherheitsstopfbuchse und Leckageüberwachung,
- Fig. 7: teilweise einen Schnitt durch den Durchgangshahn gemäß Fig. 1 während der Montage.

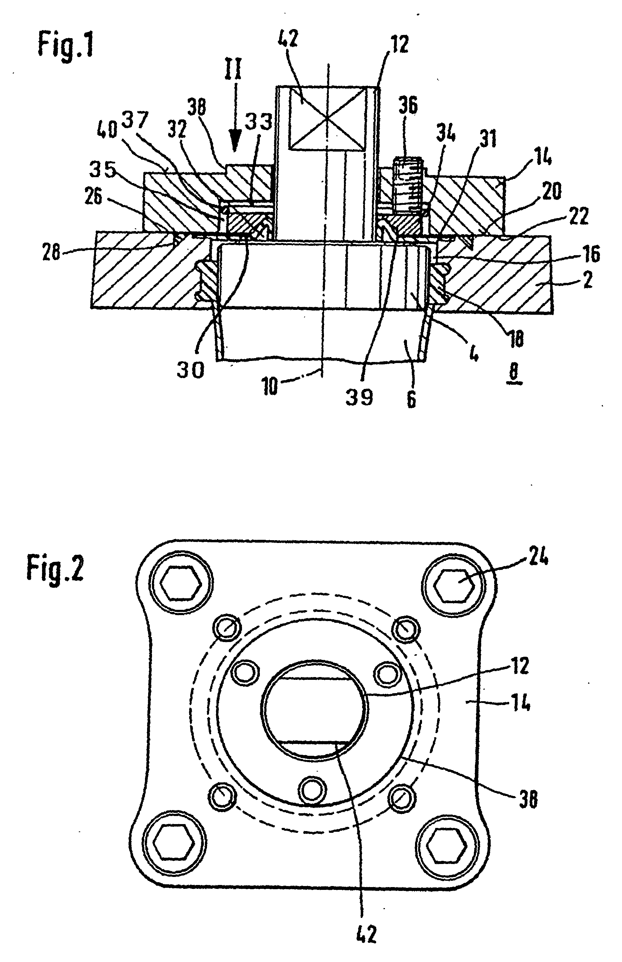

Fig. 1 zeigt teilweise das Gehäuse 2 der als Durchgangshahn ausgebildeten Armatur mit dem als konisches Küken ausgebildeten Drehkörper 4, welcher eine Durchgangsöffnung 6 enthält. In der dargestellten Drehposition des Drehkörpers 4 kann ein Strömungsmedium die Durchgangsöffnung 6 sowie den Innenraum 8 des Gehäuses 2 durchströmen. Es sei an dieser Stelle ausdrücklich festgehalten, daß die erfindungsgemäße Armatur anstelle des Kükens oder Drehkörpers einen kugelförmigen Drehkörper, Drosselkörper oder eine Klappenscheibe enthalten kann und je nach Einsatzgebiet als Durchgangs-, Mehrwege-, Regel- oder Kügelhahn oder als Klappe oder dergleichen ausgebildet sein kann. Lediglich der Einfacheit halber wird nachfolgend der Drehkörper 4 auch als Absperrorgan oder Küken bezeichnet. Nach einer Drehung des Absperrorgans 4 um dessen Drehachse 10 um 90° ist hingegen der Durchfluß für das Strömungsmedium gesperrt. Mit dem Absperrorgan 4 ist einteilig ein Schaft 12 verbunden, welcher durch einen Deckel 14 aus dem Gehäuse 2 herausgeführt ist. Die Schaftachse ist mit der Dreh- oder Kükenachse 10 identisch. In der für das Absperrorgan 4 vorgesehenen Gehäuseausnehmung 16 ist eine Buchse 18 zur Lagerung und zur Abdichtung des drehbaren Absperrorgans angeordnet. Die Buchse 18 besteht insbesondere aus PTFE oder einem vergleichbaren Werkstoff, welcher im Vergleich mit dem vorzugsweise aus Metall bestehenden Gehäuses 2 weicher ist und/ oder die schwimmende Lagerung des Absperrorgans 4 gewährleistet. Eine metallische Berührung des zweckmäßig gleichfalls aus Metall bestehenden Absperrorgans mit dem Gehäuse 2 wird mittels der genannten Buchse 18 verhindert. Es sei an dieser Stelle festgehalten, daß die Drehachse 10 des Absperrorgans 4 bzw. Kükens nicht notwendigerweise mit der Achse der Gehäuseöffnung fluchtet, und zwar insbesondere infolge von Fertigungstoleranzen. Aufgrund der einteiligen Ausbildung von Absperrorgan 4 und Schaft 12 in Kombination mit der nachfolgend näher zu erläuternden Anordnung und Ausbildung insbesondere des Deckels 14 sowie weiterer Sekundärteile werden unerwünschte Querkräfte vermieden.

Das Gehäuse 2 enthält eine dem Deckel 14 zugeordnete Auflagefläche 20, an welcher der Deckel 14 mit einer ebenen Ringfläche 22 unmittelbar kraftschlüssig aufliegt. Wesentlich ist hierbei, daß der Deckel, insbesondere bei der Montage, in radialer Richtung bezüglich des Gehäuses 2 frei bewegbar und koaxial zur Drehachse 10 des Absperrorgans 4 ausrichtbar ist. Mittels der in Fig. 2 dargestellten Deckelschrauben 24 erfolgt danach die feste ausschließlich kraftschlüssige Verbindung des metallisch direkt auf der Auflagefläche 20 des Gehäuses 2 aufliegenden Deckels 14 mit dem Gehäuse 2. Zur gegenseitigen Ausrichtung oder Zentrierung von Deckel 14 und Gehäuse 2 sind Ringschultern, Zentrierbunde oder dergleichen in vorteilhafter Weise weder am Gehäuse 2 noch am Deckel 14 vorhanden.

Zwischen dem Gehäuse 2 und dem Deckel 14 ist ferner eine Deckeldichtung 26 vorgesehen, welche zweckmäßig in einer Ringnut 28 des Gehäuses 2 radial nach innen angrenzend an die Auflagefläche 20 vorgesehen ist. Zur Abdichtung des Absperrorgans 4 sowie des Schaftes 12 ist ferner ein erstes sekundäres Dichtelement 30 vorgesehen, welches bevorzugt als eine gleichfalls aus PTFE bestehende Formmembrane ausgebildet ist. Ferner ist eine Stahlmembrane 31 vorgesehen, welche zwischen dem Deckel 14 und der Formmembrane 30 liegt. Diese teilweise an der insbesondere zylindrischen Außenfläche des Schaftes 12 mit einer Lippe anliegende Formmembrane 30 ist in bevorzugter Weise radial bezüglich des Schaftes 12 ausrichtbar. Dies erfolgt insbesondere bei der Deckelmontage, bevor die genannten Deckelschrauben 24 fest angezogen werden. Aufgrund der radialen Ausrichtbarkeit der Formmembrane 30 und insbesondere auch der Stahlmembrane 31 bezüglich des Schaftes 12 und somit bezüglich des einteilig mit diesem verbundenen Absperrorgans 4 werden in bevorzugter Weise ein Achsversatz bezüglich des Absperrorgans 4 und ansonsten hieraus resultierende Querkräfte und deren nachteiligen Folgen in besonders zweckmäßiger Weise vermieden. Die Formmembrane 30 ist radial innen im Bereich der zum Schaft 12 koaxialen Lippe mittels eines Dreieck- oder Deltaringes 32 abgestützt, welcher in der dargestellten Weise seinerseits auf dem oberen Ringbund des Absperrorgans 4 abgestützt ist.

Ferner ist innerhalb des Deckels 14 in einer Ausnehmung 33, welche als Ringraum ausgebildet ist, ein als Ring 34 ausgebildeter Zentrierkörper vorgesehen, welcher gemäß Zeichnung oben auf dem inneren Teil der Formmembrane 30 aufliegt. Zwischen der Innenwand des Ringraumes 33 und dem Zentrierkörper 34 ist ein Ringspalt 35 vorhanden. Der Zentrierkörper 34 ist bevorzugt ringförmig ausgebildet und dient gleichzeitig als Druckring. Auf der anderen Seite, gemäß Zeichnung oben, ist dem Zentrierkörper und Druckring 34 wenigstens ein Einstellelement 36, insbesondere in Form einer Schraube, zugeordnet, welches in Deckel 14 festgelegt ist und von der Außenseite her betätigbar ist. Zweckmäßig sind über den Umfang verteilt mehrere derartige Einstellelemente 36 oder Schrauben vorgesehen, um über den Druckring 34 die axiale Nachstellung des Absperrorgans 4 bei Bedarf zu ermöglichen. Der Zentrierkörper und/oder Druckring 34 ist über einen im Ringspalt 35 angeordneten Dichtring 37 radial an der bevorzugt zylindrischen Innenwand des Deckels 14 elastisch abgestützt. Das mit seinem radial außenliegenden Rand zwischen dem Gehäuse 2 und dem Deckel 14 eingespannte Dichtelement 30 dient zur sekundären Abdichtung der Gehäuseausnehmung 16 nach außen, wobei die radial innenliegende, hakenförmig ausgebildete Dichtlippe am Schaft 12 anliegt. Abgesehen von der radial außenliegenden Einspannung ist das sekundäre Dichtelement 30 nicht unmittelbar am Deckel 14 abgestützt, sondern zumindest in radialer Richtung am Zentrierkörper und/oder Druckring 34. Wie ersichtlich, besitzt der Zentrierkörper eine entsprechend der hakenförmigen Dichtlippe eine zur Längsachse 10 geneigte Stützfläche 39, welche u.a. eine in radialer Richtung wirksame Abstützung des Dichtelements 30 gewährleistet. Aufgrund der derart ausgebildeten mittelbaren, radialen Abstützung des Dichtelements 30 über den Zentrierkörper 34 im Deckel 14, wird eine zur Längsachse 10 koaxiale Ausrichtung des Dichtelements 30, insbesondere dessen am Schaft 12 anliegenden Dichtlippe sichergestellt.

Der Deckel 14 weist ferner an seiner dem Gehäuse 2 abgewandten Seite einen Zentrierbund 38 sowie eine Auflagefläche 40 für eine hier nicht weiter dargestellte Konsole eines Antriebs auf, welcher mit dem Schaft 12 über wenigstens eine, insbesondere ebene, achsparallele, Eingriffsfläche 42 gekoppelt ist.

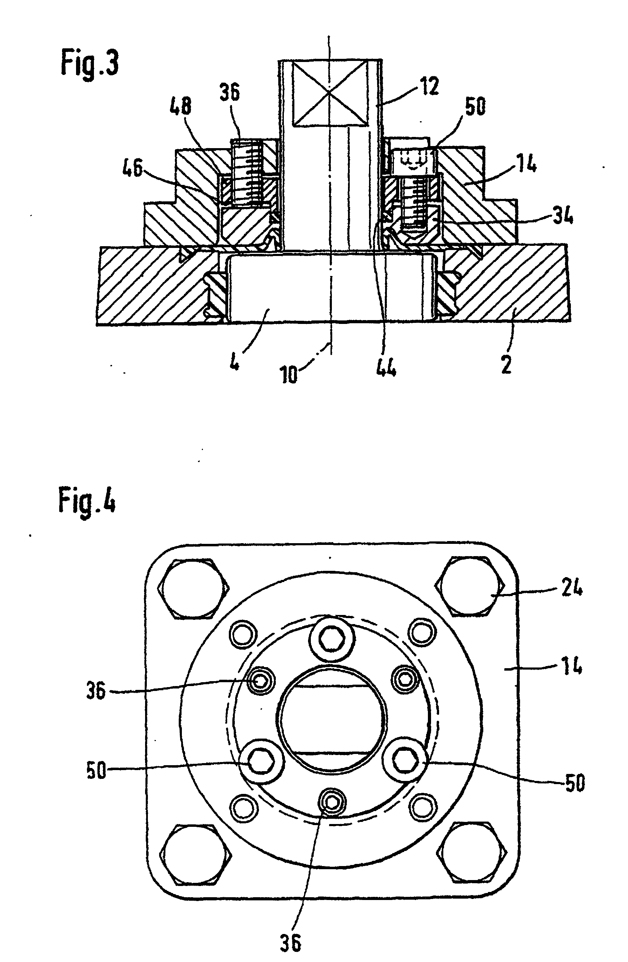

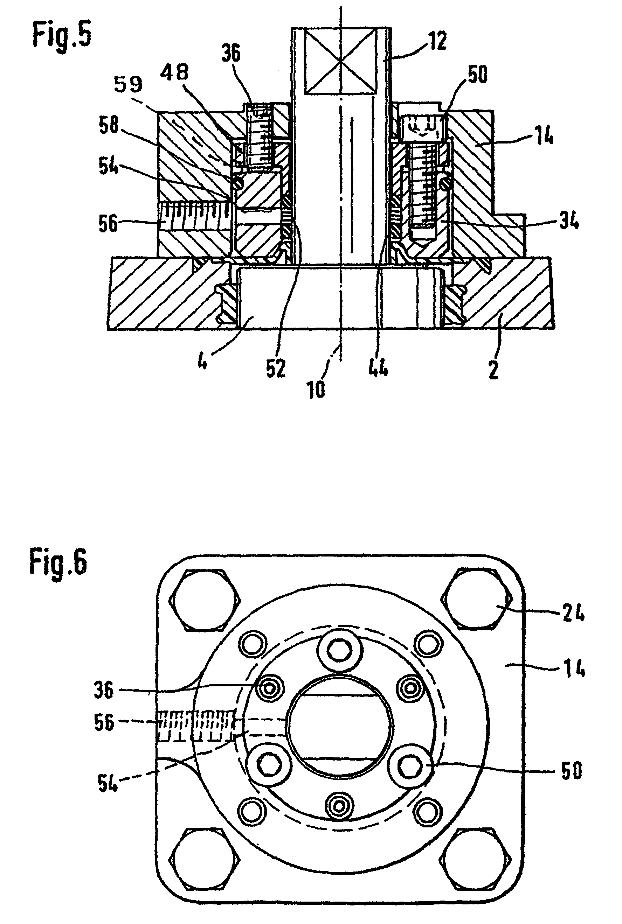

Fig. 3 und 4 zeigen eine Ausführungsform des Durchgangshahns mit einer zweiten Sekundärdichtung 44, welche als Stopfbuchse ausgebildet ist. Die dem Schaft 12 zugeordnete zweite Sekundärdichtung 44 ist ebenso wie der Druckring 34 in einem Ringraum 46 innerhalb des Deckels 14 angeordnet, welcher in der oben erläuterten Weise ausschließlich kraftschlüssig mit dem Gehäuse 2 verbunden ist. Der Sekundärdichtung bzw. Stopfbuchse 44 ist ein weiterer Druckring 48 zugeordnet, mittels welchem die Ein- bzw. Nachstellung der Sekundärdichtung 44 durchführbar ist. Hierzu ist im Deckel 14 insbesondere wenigstens eine Schraube 50 vorgesehen. Wie in Verbindung mit Fig. 4 ersichtlich, sind über den Umfang verteilt mehrere, zweckmäßigigerweise drei Einstellschrauben 50 vorgesehen, die von der Außenseite betätigbar sind und somit bedarfsweise über den Druckring 34 die axiale Nachstellung des Absperrorgans 4 und der ersten Sekundärdichtung, nämlich der Formmembrane 30, ermöglichen, und zwar ohne Beeinflussung der zweiten Sekundärdichtung 44. Somit bestehen zur Abdichtung nach außen drei Dichtsysteme, von denen zwei unabhängig voneinander nachgestellt werden können. Diese besondere Ausführungsform ist als mindestens gleichwertig zu einer Faltenbalgabdichtung mit nachgeschalteter Sicherheitsstopfbuchse anzusehen und erfüllt somit die Sicherheitsanforderungen, insbesondere gemäß der deutschen Störfallverordnung oder TA-LUFT oder des 12.BlmSchV. Die erfindungsgemäße Armatur enthält als Primärdichtung zwischen dem Gehäuse 2 und dem Absperrorgan 4 die Büchse 18, wobei die Nachstellung über einen Gewindestift 36 ermöglicht ist. Als erste Sekundärdichtung ist die genannte Formmembrane 30 vorgesehen, deren Nachstellung ebenfalls über den Gewindestift 36 erfolgt. Schließlich ist als zweite Sekundärdichtung die Stopfbuchse 44 vorgesehen, zu deren Nachstellung die Einstellschraube 50 vorgesehen ist. Bei der Montage vor dem Festschrauben des Deckels 14 mittels der Deckelschrauben 24 auf dem Gehäuse 2 erfolgt selbsttätig auch eine Zentrierung der zweiten Sekundärdichtung 44 bezüglich der Drehachse 10 des Absperrorgans 4. Hinsichtlich der übrigen Bauteile und Funktionszusammenhänge wird im übrigen auf obigen Ausführungen Bezug genommen.

Fig. 5 und 6 zeigen eine weitere Ausführungsform, welche grundsätzlich den oben erläuterten Ausführungsformen entspricht, jedoch zusätzlich eine Leckageüberwachung ermöglicht. Im Bereich der zweiten Sekundärdichtung 44, welche wiederum zweckmäßig als Stopfbuchse ausgebildet ist, ist ein Leckagering 52 vorgesehen, welcher den insbesondere radialen Durchtritt eventueller Leckagen durch eine Bohrung 54 im ersten Druckring 34 ermöglicht und einer Anschlußöffnung 56 für einen Überwachungsanschluß zuleitet. Mittels des Dichtringes 58 zwischen der Außenfläche des Druckringes 34 und der Innenfläche des Deckels 14 wird ein Austritt von Leckagen nach außen in zweckmäßiger Weise unterbunden. Wie mit gestrichelter Linie 59 angedeutet, kann alternativ der vorstehend genannte Dichtring radial außen im Bereich zwischen dem Zentrierkörper oder ersten Druckring 34 und dem weiteren Druckring 48 angeordnet sein. Bei dieser alternativen Ausgestaltung sind zur Aufnahme des Dichtringes 59 die einander zugewandten äußeren Ecken des Zentrierkörpers oder Druckringes 34 sowie des weiteren Druckkörpers 48 entsprechend der sphärischen Kontur des Dichtringes 59 ausgebildet.

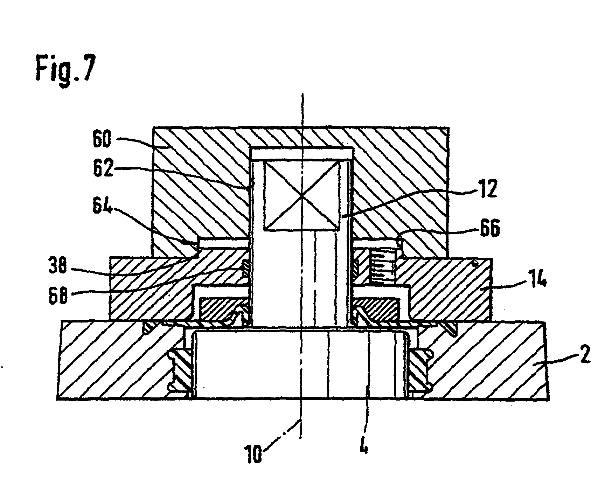

Fig. 7 zeigt den Durchgangshahn während der Montage. Erfindungsgemäß ist eine Montagevorrichtung zur Zentrierung des Deckels 14 bezüglich der Drehachse 10 des Drehkörpers 4 vorgesehen. Die Montagevorrichtung enthält eine Montagehülse 60, deren Innenfläche 62 spielfrei an der Außenfläche des Schaftes 12 anliegt. Des weiteren sind Zentriermittel zur Zentrierung bzw. exakt koaxialen Ausrichtung des Deckels 14 bezüglich des Schaftes 12 und somit der Drehachse 10 des Drehkörpers 4 vorgesehen. Diese Zentriermittel 64 sind insbesondere als eine Ringschulter 66 der Montagehülse und als der mit der genannten Ringschulter 66 korrespondierende Zentrierbund 38 des Deckels 14 ausgebildet. Der Zentrierbund 38 besitzt somit in bevorzugter Weise eine Doppelfunktion dahingehend, daß er einerseits zur Zentrierung des Deckels 14 bezüglich der Drehachse 10 und andererseits zur Zentrierung der oben erwähnten Konsole eines Antriebs vorgesehen ist. Nach der Zentrierung des Deckels 14 wird durch Festziehen der genannten Deckelschrauben eine feste kraftschlüssige Verbindung mit dem Gehäuse 2 hergestellt.

In einer alternativen Ausgestaltung kann der Deckel 14 einen Zentrierring 68 enthalten, welcher an der Außenfläche des Schaftes 12 anliegt. Mittels des Zentrierringes 68 erfolgt die Zentrierung des Deckels 14 bei der Montage, und zwar vor dem Festziehen der genannten Deckelschrauben. Es sei ausdrücklich festgehalten, daß nach dem Herstellen der festen Verbindung des Deckels 14 der Zentrierring 68 keinesfalls eine Lagerungsfunktion für den Schaft 12 aufweist.

### Bezugszeichen

- 2: Gehäuse
- 4: Drehkörper / Küken
- 6: Durchgangsöffnung in 4
- 8: Innenraum von 2
- 10: Drehachse von 4
- 12: Schaft
- 14: Deckel
- 16: Gehäuseausnehmung
- 18: Büchse
- 20: Auflagefläche
- 22: Ringfläche
- 24: Deckelschraube
- 26: Deckeldichtung
- 28: Ringnut
- 30: erstes sekundäres Dichtelement / Formmembrane
- 31: Stahlmembrane
- 32: Deltaring
- 33: Ausnehmung / Ringraum
- 34: Zentrierkörper / Druckring / Ring
- 35: radialer Ringspalt
- 36: Einstellelement / Gewindestift
- 37: Dichtring
- 38: Zentrierbund
- 39: Stützfläche
- 40: Auflagefläche
- 42: Eingriffsfläche
- 44: zweites sekundäres Dichtelement / Stopfbuchse
- 46: Ringraum
- 48: weiterer Druckring
- 50: Einstellschraube
- 52: Leckagering
- 54: Bohrung in 34
- 56: Anschlußöffnung in 14
- 58: Dichtring
- 59: gestrichelte Linie / Dichtring
- 60: Montagehülse
- 62: Innenfläche von 60
- 64: Zentriermittel
- 66: Ringschulter
- 68: Zentrierring

## Patentansprüche

1. Verfahren zur Herstellung einer Armatur, enthaltend ein Gehäuse (2) und in diesem einen Drehkörper (4), welcher insbesondere als konisches Küken ausgebildet ist, eine im Gehäuse (2) angeordnete Büchse (18) zur schwimmenden Lagerung und Abdichtung des Drehkörpers (4), welcher um eine Drehachse (10) mittels eines Schaftes (12) drehbar ist, und ferner enthaltend einen Deckel (14), durch welchen der mit dem Drehkörper (4) einteilig verbundene Schaft (12) nach außen geführt wird und welcher in einem Ringraum (33, 34) einen Druckring (34) enthält, welcher unter Bildung eines radialen Ringspaltes (35) im Deckel (14) angeordnet wird und welcher einem am Schaft (12) anliegenden Dichtelement (30, 34) zugeordnet wird, wobei der Deckel (14) über eine ebene Ringfläche (22) an einer Anlagefläche (20) des Gehäuses (2) zur Anlage gebracht und zentriert wird und mit dem Gehäuse (2) kraftschlüssig verbunden wird,
**dadurch gekennzeichnet, daß** der Deckel (14) zunächst mit der ebenen Ringfläche (22) direkt an der gleichfalls ebenen Antagefläche (20) des Gehäuses zur Anlage gebracht wird, wobei keine Zentriermittel für den Deckel (14) bezüglich des Gehäuses (2) vorgesehen werden,
daß danach der Deckel (14) bezüglich des Schaftes (12) und somit der Drehachse (10) des Drehkörpers (4) exakt koaxial ausgerichtet wird, und zwar
• mittels einer Montagehülse (60), deren Innenfläche (62) spielfrei an der Außenfläche des Schaftes (12) anliegt und welche mit Zentriermitteln (38) des Deckels (14) korrespondierende Zentriermittel (66) enthält,
• oder mittels eines im Deckel (14) angeordneten Zentrierringes (68), welcher einerseits an der Außenfläche des Schaftes (12) und andererseits an einer Innenfläche des Deckels (12) anliegt,
und daß nachfolgend der Deckel (14) in bekannter Weise durch Festziehen von Deckelschrauben (24) kraftschlüssig mit dem Gehäuse (2) verbunden wird.

2. Verfahren nach Anspruch 1, wobei die Montagehülse (60) als Zentriermittel eine Ringschulter (66) aufweist, welche mit einem Zentrierbund (38) des Deckels (14) korrespondiert.

3. Verfahren nach Anspruch 1 oder 2, wobei die dem Gehäuse (2) zugewandte untere Ringfläche (22) des Deckels (14) durchgehend eben ausgebildet ist.

4. Verfahren nach einem der Ansprüche 1 bis 3, wobei eine dem Deckel (14) zugewandte Oberfläche des Gehäuses (2) eine Ringnut (28) für eine Deckeldichtung (26) enthält, an welche die untere Ringfläche (22) des Deckels (14) dichtend zur Anlage gebracht wird.

5. Verfahren nach einem der Ansprüche 1 bis 4, **dadurch gekennzeichnet, daß** an den Schaft (12) eine Formmembrane (30) als sekundäres Dichtelement dichtend zur Anlage gebracht wird und vor der Herstellung der festen Verbindung des Deckels (14) mit dem Gehäuse (2) über den Schaft (12) bezüglich der Drehachse (10) des Drehkörpers (4) zentriert wird, wobei nachfolgend die Formmembrane (30) zwischen dem Deckel (14) und dem Gehäuse (2) festgelegt wird.

6. Verfahren nach einem der Ansprüche 1 bis 5, **dadurch gekennzeichnet, daß** an dem als Zentrierkörper ausgebildeten Druckring (34) des Deckels (14) das Dichtelement (30, 44) zur Anlage gebracht wird, wobei zwischen dem Ring (34) und dem Deckel (14) ein radialer Ringspalt (35) vorgesehen wird.

7. Verfahren nach Anspruch 6, **dadurch gekennzeichnet, daß** zwischen dem Druckring (34) und dem Deckel (14) ein elastisches Element und / oder ein Dichtring (37) angeordnet wird.

8. Verfahren nach einem der Ansprüche 1 bis 7, **dadurch gekennzeichnet, daß** innerhalb des Ringraumes (33, 46) des Deckels (14) ein zweites sekundäres Dichtelement (44) angeordnet wird, welches insbesondere als Stopfbuchse ausgebildet ist, und daß das Dichtelement (44) mittels eines weiteren im Ringraum (46) angeordneten Druckringes (48) eingestellt wird.

9. Verfahren nach Anspruch 8, **dadurch gekennzeichnet, daß** dem zweiten sekundären Dichtelement (44) ein Leckagering (52) zugeordnet wird, wobei über eine bevorzugt radiale Bohrung (54) im Druckring.(34) sowie eine Anschlußöffnung (56) im Deckel (14) eine Verbindung nach außen hergestellt wird.

## Claims

1. A process for making a fitting, containing a housing (2) and, in the latter, a rotary body (4) which is constructed in particular as a conical cock plug, a sleeve (18) which is arranged in the housing (2) for floating mounting and sealing of the rotary body (4), the latter being rotatable about an axis of rotation (10) by means of a shaft (12), and furthermore containing a cover (14) through which the shaft (12), connected in one piece with the rotary body (4), is guided to the outside and which contains in an annular space (33, 34) a thrust ring (34) which is arranged such that a radial annular gap (35) is formed in the cover (14) and which is associated with a sealing element (30, 34) abutting against the shaft (12), with the cover (14) being brought into abutment against an abutment face (20) of the housing (2) by way of a planar annular face (22) and centred, and being force-fittingly connected to the housing (2),
**characterised in that** the cover (14) is first of all by means of the planar annular face (22) brought into abutment directly against the similarly planar abutment face (20) of the housing, with no means of centring the cover (14) with respect to the housing (2) being provided,
**in that** the cover (14) is then aligned to be precisely coaxial with respect to the shaft (12) and hence the axis of rotation (10) of the rotary body (4), namely
• by means of a mounting sleeve (60) whereof the inner face (62) abuts without play against the outer face of the shaft (12) and which contains centring means (66) corresponding with means (38) of centring the cover (14),
• or by means of a centring ring (68) which is arranged in the cover (14) and abuts on the one hand against the outer face of the shaft (12) and on the other hand against an inner face of the cover (12),
and **in that** the cover (14) is subsequently and in known manner connected force-fittingly to the housing (2) by tightening cover screws (24).

2. A process according to Claim 1, in which the mounting sleeve (60) has as the centring means an annular shoulder (66) which corresponds with a centring collar (38) of the cover (14).

3. A process according to Claim 1 or 2, in which the lower annular face (22) of the cover (14), facing the housing (2), is of planar construction throughout.

4. A process according to one of Claims 1 to 3, in which an upper face of the housing (2), facing the cover (14), contains an annular groove (28) for a cover seal (26) against which the lower annular face (22) of the cover (14) is brought into sealing abutment.

5. A process according to one of Claims 1 to 4, **characterised in that** a shape membrane (30) is brought into sealing abutment against the shaft (12) as a secondary sealing element, and before the fixed connection between the cover (14) and the housing (2) is made is centred by way of the shaft (12) with respect to the axis of rotation (10) of the rotary body (4), after which the shape membrane (30) is fixed in place between the cover (14) and the housing (2).

6. A process according to one of Claims 1 to 5, **characterised in that** the sealing element (30) is brought into abutment against the thrust ring (34), constructed as a centring body, of the cover (14), with a radial annular gap (35) being provided between the ring (34) and the cover (14).

7. A process according to Claim 6, **characterised in that** a resilient element and/or a thrust ring (37) is arranged between the thrust ring (34) and the cover (14).

8. A process according to one of Claims 1 to 7, **characterised in that** within the annular space (33, 46) of the cover (14) there is arranged a second secondary sealing element (44) which is constructed in particular as a gland, and **in that** the sealing element (44) is adjusted by means of a further thrust ring (48) arranged in the annular space (46).

9. A process according to Claim 8, **characterised in that** there is associated with the second secondary sealing element (44) a leak ring (52), a connection to the outside being made by way of a preferably radial bore (54) in the thrust ring (34) and an adjoining opening (56) in the cover (14).

## Revendications

1. Procédé de fabrication d'un accessoire de robinetterie, comprenant un boîtier (2) et dans celui-ci un corps tournant (4), qui est conformé en particulier en boisseau conique, une douille (18) placée dans le boîtier (2) pour soutenir de manière flottante et rendre étanche le corps tournant (4), lequel peut tourner autour d'un axe de rotation (10) au moyen d'une tige (12), et comprenant de plus un couvercle (14), à travers lequel la tige (12) reliée d'un seul tenant au corps tournant (4) sort vers l'extérieur et qui contient, dans un espace annulaire (33, 34), une bague de pression (34) qui est placée dans le couvercle (14) en formant une fente annulaire radiale (35) et qui est associée à un élément d'étanchéité (30, 34) en appui sur la tige (12), le couvercle (14) étant mis en appui et centré contre une surface d'appui (20) du boîtier (2) par l'intermédiaire d'une surface annulaire plane (22) et étant relié par adhérence au boîtier (2), ***caractérisé en ce que*** le couvercle (14) est d'abord mis en appui avec la surface annulaire plane (22) directement contre la surface d'appui (20) également plane du boîtier, aucun moyen de centrage n'étant prévu pour le couvercle (14) par rapport au boîtier (2),
***en ce qu***'ensuite, le couvercle (14) est aligné de manière exactement coaxiale par rapport à la tige (12) et, ainsi, à l'axe de rotation (10) du corps tournant (4), en particulier
- au moyen d'une douille de montage (60) dont la surface intérieure (62) s'appuie sur la surface extérieure de la tige (12) et qui contient des moyens de centrage (66) correspondant à des moyens de centrage (38) du couvercle (14),
- ou au moyen d'une bague de centrage (68) placée dans le couvercle (14), qui s'appuie d'une part sur la surface extérieure de la tige (12) et d'autre part sur une surface intérieure du couvercle (12),
et ***en ce qu***'ensuite, le couvercle (14) est relié de manière connue, par adhérence au boîtier (2) par serrage des vis de couvercle (24).

2. Procédé selon la Revendication 1, dans lequel la douille de montage (60) présente comme moyens de centrage un épaulement annulaire (66) qui correspond à une collerette de centrage (38) du couvercle (14).

3. Procédé selon la Revendication 1 ou 2, dans lequel la surface annulaire inférieure (22) du couvercle (14) tournée vers le boîtier (2) est conformée de manière uniformément plane.

4. Procédé selon l'une quelconque des Revendications 1 à 3, dans lequel une surface du boîtier (2) orientée vers le couvercle (14) contient une rainure annulaire (28) pour un joint (26) de couvercle contre lequel la surface annulaire inférieure (22) du couvercle (14) est mise en appui de manière étanche.

5. Procédé selon l'une quelconque des Revendications 1 à 4, ***caractérisé en ce qu***'une membrane moulée (30) est placée directement en appui contre la tige (12) en tant qu'élément d'étanchéité secondaire et est centrée par l'intermédiaire de la tige (12) par rapport à l'axe de rotation (10) du corps tournant (4) avant l'établissement de la liaison ferme du couvercle (14) avec le boîtier (2), la membrane moulée (30) étant ensuite immobilisée entre le couvercle (14) et le boîtier (2).

6. Procédé selon l'une quelconque des Revendications 1 à 5, ***caractérisé en ce que*** l'élément d'étanchéité (30, 44) est mis en appui contre la bague de pression (34) du couvercle (14) conformée en corps de centrage, une fente annulaire radiale (35) étant prévue entre la bague (34) et le couvercle (14).

7. Procédé selon la Revendication 6, ***caractérisé en ce qu***'un élément élastique et/ou une bague d'étanchéité (37) est placé entre la bague de pression (34) et le couvercle (14).

8. Procédé selon l'une quelconque des Revendications 1 à 7, ***caractérisé en ce qu***'à l'intérieur de la chambre annulaire (33, 46) du couvercle (14) est placé un deuxième élément d'étanchéité secondaire (44) qui est conformé en particulier en presse-étoupe, ***et en ce que*** l'élément d'étanchéité (44) est réglé au moyen d'une autre bague de pression (48) placée dans l'espace annulaire (46).

9. Procédé selon la Revendication 8, ***caractérisé en ce qu***'une bague anti-fuites (52) est associée au deuxième élément d'étanchéité secondaire (44), une liaison vers l'extérieur étant établie par l'intermédiaire d'un perçage (54) de préférence radial dans la bague de pression (34), ainsi que d'une ouverture de raccordement (56) dans le couvercle (14).
